# EUROPÄISCHE PATENTSCHRIFT

(11) **EP 2 779 347 B1**
(45) Veröffentlichungstag und Bekanntmachung des Hinweises auf die Patenterteilung: **29.03.2017**
(21) Anmeldenummer: 14154639.0
(22) Anmeldetag: 11.02.2014
(51) Int. Cl.: H02J 3/00, H02J 13/00, H02J 3/12

(54) **Verfahren und Vorrichtung zum Betreiben eines Stromnetzes**
Method and device for operating a power network
Procédé et dispositif de fonctionnement d'un réseau électrique

(30) Priorität: 14.03.2013 DE 102013204482
(43) Veröffentlichungstag der Anmeldung: 17.09.2014
(73) Patentinhaber: Siemens Aktiengesellschaft, 80333 München (DE)
(72) Erfinder: Bopp, Thomas, Dr., 90482 Nürnberg (DE); Gaxiola, Enrique, Dr., 13090 Aix en Provence (FR); Hubauer, Thomas, 81475 München (DE); Krebs, Rainer, Dr., 91052 Erlangen (DE); Lamparter, Steffen, Dr., 85622 Feldkirchen (DE); Rusitschka, Sebnem, 81543 Muenchen (DE)

(56) Entgegenhaltungen:
- WO-A1-2011/056144
- WO-A2-2008/003033
- XU T ET AL: "Case-based reasoning for coordinated voltage control on distribution networks", ELECTRIC POWER SYSTEMS RESEARCH, ELSEVIER, AMSTERDAM, NL, Bd. 81, Nr. 12, 4. August 2011 (2011-08-04), Seiten 2088-2098, XP028292507, ISSN: 0378-7796, DOI: 10.1016/J.EPSR.2011.08.005 [gefunden am 2011-08-09]
- TIAKO R ET AL: "Real-time dynamic security assessment of power systems with large amount of wind power using Case-Based Reasoning methodology", POWER AND ENERGY SOCIETY GENERAL MEETING, 2012 IEEE, IEEE, 22. Juli 2012 (2012-07-22), Seiten 1-7, XP032394386, DOI: 10.1109/PESGM.2012.6345033 ISBN: 978-1-4673-2727-5
- ISLAM S ET AL: "A case-based expert system for power system restoration", ELECTRICAL AND COMPUTER ENGINEERING, 1999 IEEE CANADIAN CONFERENCE ON EDMONTON, ALTA., CANADA 9-12 MAY 1999, PISCATAWAY, NJ, USA,IEEE, US, 9. Mai 1999 (1999-05-09), Seite 1159, XP032158431, DOI: 10.1109/CCECE.1999.808222 ISBN: 978-0-7803-5579-8
- HAMED AHMADI ET AL: "Probabilistic optimal power flow incorporating wind power using point estimate methods", ENVIRONMENT AND ELECTRICAL ENGINEERING (EEEIC), 2011 10TH INTERNATIONAL CONFERENCE ON, IEEE, 8. Mai 2011 (2011-05-08), Seiten 1-5, XP031946996, DOI: 10.1109/EEEIC.2011.5874815 ISBN: 978-1-4244-8779-0

## Beschreibung

Die vorliegende Erfindung betrifft ein Verfahren und eine Vorrichtung zum Betreiben eines Stromnetzes.

Die vorliegende Erfindung betrifft ein Verfahren und eine Vorrichtung zum Betreiben eines eine Vielzahl von Netzwerkelementen umfassenden Stromnetzes.

Herkömmliche Stromnetze sind so konfiguriert, dass vorhersehbare Störungen abgefangen werden können. Das betreffende Sicherheitskriterium wird als N-1-Kriterium bezeichnet. Das N-1-Kriterium bedeutet, dass das Stromnetz trotz eines Ausfalls einer beliebigen Netzwerkkomponente in einem sicheren Zustand verbleibt, aus dem heraus es wieder in den Normalzustand gebracht werden kann.

Kommt es dennoch zu einem Stromausfall, ist der Grund in der Regel der, dass sich das Stromnetz zuvor schon in einem N-1-Zustand befunden hat, und dass in dem unter Last stehenden Stromnetz in dieser Situation zusätzlich und unvorhergesehen eine weitere Netzwerkkomponente ausgefallen ist. Derartige weitere Ausfälle können zu einer ganzen Kaskade von Störungen und Ausfällen und somit letztlich zu einem kompletten Stromausfall führen.

Viele derartige unvorhergesehene Ereignisse sind jedoch unter Verwendung von Real-Time-Informationen beispielsweise durch fortgeschrittene Simulationen vorhersagbar.

In heutigen Systemen zur Vermeidung von Stromausfällen werden so genannte Special Protection Schemes (SPS) verwendet. Ein derartiges SPS ermöglicht es, Störungen im Stromnetz zu beheben. SPS sind Teil eines so genannten Abwehr-Plans (Defense Plan). Ein Abwehr-Plan ist ein vordefiniertes System von Aktionen, beispielsweise Schalthandlungen, die ausgeführt werden können, um Störungen im Stromnetz zu beheben. Derartige vordefinierte Aktionen haben jedoch eine Reihe von Nachteilen. Insbesondere sind vordefinierte Aktionen selten geeignet, eine aktuell vorliegende Störung zu beheben, da die Ausführung dieser vordefinierten Aktionen in der Regel eine Über- bzw. eine Unter-Reaktion darstellt. Dieser Umstand wird lediglich dadurch gemildert, dass die Stromnetze genügend große Reserven aufweisen. Dies ist jedoch aufwändig und entsprechend teuer. Zudem geraten aktuelle Stromnetze beispielsweise durch die Deregulierung des Stromhandels oder durch das Einspeisen erneuerbarer Energie an ihre Kapazitätsgrenzen.

Bekannt sind weiterhin Offline-Simulationen, um geeignete Parameter für ein geplantes Stromnetz zu ermitteln, die Eingang in ein SPS finden können. Allerdings sind dabei lediglich N-1- oder N-2-Szenarien abgedeckt. Weiterhin wird angenommen, dass kaskadierende Ereignisse nur mit einer geringen Wahrscheinlichkeit eintreten.

Derartige Simulationen sind jedoch nicht für Echtzeit-Anwendungen geeignet und können dabei kaum eingesetzt werden, um in Echtzeit Störungen vorherzusagen oder zu beheben. Zudem sind die Dynamiken im Stromnetz hoch komplex, so dass keine analytische Lösung mit einer gegebenen Genauigkeit für eine gegebene Zeitspanne ermittelt werden kann.

XU, T. et al., "Case-based reasoning for coordinated voltage control on distribution networks", Electric Power Systems Research, Elsevier, Amsterdam, NL, Bd. 81, Nr. 12, 4.August 2011, offenbart ein Verfahren, zur Spannungssteuerung von Netwerken mit mehreren verbundenen verteilten Generatoren. Das Verfahren verwendet ein Fall basiertes Schließen sowie eine Onlineverifizierung, um eine geeignete Menge an Steueraktionen auszuwählen.

WO 2011/056144 A1 offenbart ein System zur Fehlerdiagnose für ein Stromnetzsystem. Einem auftretenden Fehler wird ein Fall mit einer Identifikationsnummer zugeordnet und diese werden in einer Datenbank gespeichert. Die Fälle beinhalten Empfehlungen zur Fehlerbehebung.

WO 2008/003033 A2 offenbart ein System zur Realzeitoptimierung von Stromressourcen in einem elektrischen System. Eine Funktionseinheit erzeugt vorhergesagte Datenausgänge für das elektrische System unter Verwendung eines virtuellen Systemmodels des elektrischen Systems.

Somit besteht Bedarf an Werkzeugen für eine Vorhersage kritischer Zustände sowie für die Behandlung aktueller kritischer Zustände in einem Stromnetz.

Vor diesem Hintergrund besteht eine Aufgabe der vorliegenden Erfindung darin, ein verbessertes Verfahren zum Betreiben eines Stromnetzes bereitzustellen, das die oben dargestellten Nachteile vermeidet.

Diese Aufgabe wird durch das Verfahren nach Anspruch 1 sowie die Vorrichtung nach Anspruch 12 gelöst. Bevorzugte Ausführungsformen sind Gegenstand der Unteransprüche.

Der erfasste Zustand ist dabei der aktuelle Zustand des Stromnetzes, der beispielsweise durch die elektrische Spannung, verfügbare Energie (Menge und Phase), Kapazität einer Leitung oder Blindleistung eines Netzwerkelements bestimmt ist.

In einer Fallbasis, auch Falldatenbank oder Case Memory genannt, sind bereits gelöste Probleme als Fälle gespeichert. Ein solcher Fall besteht mindestens aus einer Problembeschreibung und einer zugehörigen Problemlösung. Ein aktuell erfasster Zustand des Stromnetzes stellt dabei das Problem dar, beispielsweise wenn ein Netzwerkelement ausgefallen ist. Im Schritt des Ermittelns wird das aktuelle Problem und somit der aktuell vorliegende Fall mit den in der der Fallbasis gespeicherten Fällen verglichen. Sofern eine Lösung in der Fallbasis für diesen oder einen ähnlichen Fall ermittelt ist, wird die dieser Lösung zugeordnete Schalthandlung zur Behebung des bestimmten Zustands angewiesen.

Das Verfahren das so genannte fallbasierte Schließen (Case-Based Reasoning), ein maschinelles Lernverfahren zur Problemlösung durch Analogieschluss. Das Verfahren basiert darauf, zur Lösung eines gegebenen Problems die Lösung eines ähnlichen und früher bereits gelösten Problems heranzuziehen.

Das Verfahren erlaubt es, kritische Zustände in einem Stromnetz, insbesondere in zeitkritischen Situationen, zu erkennen und Lösungen zur Behebung auf Basis bekannter Fälle zu ermitteln. Zudem ist das Verfahren geeignet, kritische Zustände im Stromnetz vorherzusagen und geeignete vorbeugende Maßnahmen zu ermitteln.

Die Zuverlässigkeit des Verfahrens steigt dabei mit zunehmender Laufzeit.

Das Anweisen der angegebenen Schalthandlung umfasst insbesondere ein Anzeigen der angegebenen Schalthandlung mittels einer Anzeigevorrichtung für einen Benutzer und ein automatisches Ausführen der angegebenen Schalthandlung durch eine Schaltvorrichtung zur Steuerung des Stromnetzes.

Die Anzeigevorrichtung ist zum Beispiel Teil einer Leitwarte und weist einen Bildschirm auf.

Auf diese Weise ist sichergestellt, dass der Benutzer, beispielsweise das technische Personal des Stromnetzbetreibers, aus einer korrekten Menge möglicher Schalthandlungen diejenige auswählen kann, die aus seiner fachmännischen Sicht geeignet ist, den gegenwärtigen Zustand des Stromnetzes zu beheben. Insbesondere ist es möglich, dass sich der Benutzer mit anderen Benutzern, beispielsweise technischem Personal eines anderen Stromnetzbetreibers, vor einer tatsächlichen Ausführung über die auszuführenden Schalthandlungen abstimmt.

Im Fall des automatischen Ausführens der angegebenen Schalthandlung ist ein effizientes und schnelles automatisches Eingreifen ermöglicht, um einen sich andeutenden oder schon bestehenden kritischen Zustand des Stromnetzes zu vermeiden beziehungsweise zu beheben. Das automatische Ausführen wird dabei mit dem Anzeigen der angegebenen Schalthandlungen kombiniert, um ein manuelles Eingreifen durch technisches Personal zu ermöglichen.

Gemäß einer weiteren Ausführungsform umfasst das Verfahren ein Erweitern der Fallbasis. Dabei werden die folgenden Schritte ausgeführt:
Generieren mindestens eines zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfassenden Falls;
Ausführen einer auf der Zustandsbeschreibung sowie einem elektromechanischen Simulationsmodell basierenden Energie-Fluss-Simulation des Stromnetzes für den mindestens einen generierten Fall zur Ermittlung eines Effektes der zur Behebung des bestimmten Zustands des generierten Falls angegebenen Schalthandlung;
Ermitteln einer Wahrscheinlichkeit für ein Eintreten des ermittelten Effekts;
Ermitteln einer die Eignung der für die zur Behebung des bestimmten Zustands des generierten Falls angegebenen Schalthandlung bestimmenden Maßzahl mittels einer Evaluierung des ermittelten Effekts; und
Speichern des generierten Falls sowie des ermittelten Effekts, der ermittelten Wahrscheinlichkeit für das Eintreten des ermittelten Effekts und der ermittelten Maßzahl in der Fallbasis.

Zur Ermittlung der Wahrscheinlichkeit für das Eintreten des ermittelten Effekts ist beispielsweise die Simulation mit bestimmten Wahrscheinlichkeitsverteilungen versehen. Alternativ sind beispielsweise die Eingabeparameter der Simulation, wie zum Beispiel Windstärke für eine Windkraftanlage, zufallsverteilt. Es ist weiterhin möglich, beispielsweise unter Verwendung eines Monte-Carlo-Verfahrens auf Basis der Wahrscheinlichkeitsverteilungen der Eingabewerte die Wahrscheinlichkeitsverteilungen der Ausgabewerte der Simulation zu bestimmen.

Auf diese Weise ist es möglich, die dem Verfahren zugrunde liegende Fallbasis zu erweitern, wobei jeder einzelne der auf diese Weise neu generierten Fälle eine Problembeschreibung sowie eine Problemlösung umfasst.

Gemäß einer weiteren Ausführungsform wird das Erweitern der Fallbasis mehrfach ausgeführt, um auf diese Weise die Fallbasis aufzubauen.

Das Aufbauen der Fallbasis kann beispielsweise im Rahmen einer Trainingsphase vor einem ersten Start des Verfahrens erfolgen. Die Fallbasis kann jedoch auch nachträglich aufgebaut werden.

Gemäß einer weiteren Ausführungsform wird das Erweitern der Fallbasis in Form eines nicht überwachten Lernens ausgeführt.

Das Erweitern der Fallbasis erfordert keine Beaufsichtigung durch technisches Personal und kann vollständig unüberwacht ablaufen.

Gemäß einer weiteren Ausführungsform umfasst der Schritt des Ermittelns eines Falls bei einem ergebnislosen Ermitteln des von der Fallbasis umfassten Falls ferner das Erweitern der Fallbasis, so dass ein Fall ermittelt wird.

Auf diese Weise wird die Fallbasis ständig fortgebildet, wenn ein Fall in Form eines bisher nicht beobachteten Zustands des Stromnetzes erfasst wird. Der betreffende Fall wird bearbeitet und das Ergebnis in der Fallbasis gespeichert, so dass für zukünftige ähnliche Zustände des Stromnetzes geeignete Maßnahmen in Form von angegebenen Schalthandlungen zur Behebung des jeweiligen Zustands angegeben werden können.

Gemäß einer weiteren Ausführungsform werden folgende Schritte ausgeführt, wenn der ermittelte Fall mehrere Angaben einer Schalthandlung zur Behebung des bestimmten Zustands des Stromnetzes umfasst:
- Ermitteln einer Teilmenge der mehreren angegebenen Schalthandlungen in Abhängigkeit von einem bestimmten Kriterium,
- Erstellen einer Bewertung für jede Schalthandlung der Teilmenge der mehreren angegebenen Schalthandlungen,
- Sortieren der Teilmenge der mehreren angegebenen Schalthandlungen basierend auf den erstellten Bewertungen, und
- Anweisen der sortieren Teilmenge der mehreren angegebenen Schalthandlungen zur Behebung des erfassten Zustands des Stromnetzes.

Das Sortieren nach der Bewertung stellt ein Ranking der angegebenen Schalthandlungen dar.

Das bestimmte Kriterium zur Auswahl der Teilmenge der mehreren angegebenen Schalthandlungen basiert beispielsweise auf der Anzahl der notwendigen Schalthandlungen oder der Summe der Last- bzw. Generator-Verluste im Stromnetz.

Es sind auch andere Kriterien denkbar, beispielsweise die (zufällige) Auswahl einer bestimmten, vorgegebenen Anzahl von Schalthandlungen oder eine Auswahl der besten k Schalthandlungen (Top-k-Verfahren) in Bezug auf die erstellten Bewertungen der Schalthandlungen.

Gemäß einer weiteren Ausführungsform umfasst das Verfahren ferner die folgenden Schritte:
- Identifizieren mindestens eines kritischen Zustands des Stromnetzes,
- Bestimmen mindestens einer möglichen Schalthandlung für zumindest ein Netzwerkelement zur Behebung des kritischen Zustands,
- Ausführen einer auf einer Zustandsbeschreibung des kritischen Zustands des Stromnetzes sowie einem elektromechanischen Simulationsmodell basierenden Energie-Fluss-Simulation des Stromnetzes zur Ermittlung eines Effektes der zur Behebung des kritischen Zustands generierten Schalthandlung,
- Ermitteln einer Wahrscheinlichkeit für ein Eintreten des ermittelten Effekts,
- Ermitteln einer die Eignung der für die zur Behebung des kritischen Zustands generierte Schalthandlung bestimmenden Maßzahl mittels einer Evaluierung des ermittelten Effekts, und
- Speichern des kritischen Zustands des Stromnetzes, falls die ermittelte Maßzahl einen Wert unterhalb eines vorgegebenen Grenzwertes aufweist.

Auf diese Weise ist es möglich, während des laufenden Betriebs des Stromnetzes vorbeugend potenziell kritische Zustände zu erkennen und geeignete Maßnahmen, das heißt Schalthandlungen, zu ermitteln, um für den Fall eines tatsächlich eintretenden potenziell kritischen Zustands schnell auf Basis der dann schon in der Fallbasis gespeicherten Problemlösung handeln zu können.

Zur Identifizierung potenziell kritischer Zustände wird beispielsweise ein Static Probabilistic Network Analysis-Werkzeug verwendet, wie beispielsweise PRACTICE (Ciapessoni et al., Simulation approaches in cascading risk assessment, Proceedings of PMAPS, 2012).

Gemäß einer weiteren Ausführungsform wird eine Rekonfiguration des Stromnetzes eingeleitet, falls der identifizierte Zustand des Stromnetzes sich einem gespeicherten kritischen Zustand des Stromnetzes annähert.

Zu diesem Zweck wird der Zustand des Stromnetzes durch einen so genannten Rekonfigurations-Controller überwacht. Der Rekonfigurations-Controller überwacht das Stromnetz unter besonderer Berücksichtigung von sich abzeichnenden Trends von Stromnetz-Parametern. Sobald der Rekonfigurations-Controller feststellt, dass sich ein Trend in Richtung eines zuvor identifizierten und in der Fallbasis abgespeicherten potenziell kritischen Zustands des Stromnetzes abzeichnet, kann das Stromnetz vorbeugend rekonfiguriert werden, bevor der potenziell kritische Zustand tatsächlich eintritt.

Gemäß einer weiteren Ausführungsform erfolgt das Ausführen der Energie-Fluss-Simulation in Form einer Ensemble-Simulation. Dabei werden die folgenden Schritte ausgeführt:
- Erzeugen einer Mehrzahl von Variationen des bestimmten Zustands durch Variieren von den bestimmten Zustand definierenden Stromnetz-Parametern innerhalb eines vorgegebenen Variationsbereichs;
- Ausführen einer einzelnen Energie-Fluss-Simulation für jede der Mehrzahl der Variationen des bestimmten Zustands; und
- Zusammenführen der Ergebnisse der einzelnen Energie-Fluss-Simulationen.

Somit werden anstelle einer Einzel-Simulation für einen konkreten Fall mehrere Simulationen für einen nur leicht variierten Eingangs-Parametersatz ausgeführt, deren Ergebnisse zusammengeführt und in der Fallbasis gespeichert werden.

Auf diese Weise ist es möglich, auch für einen von einem bekannten Zustand hinsichtlich seiner Parameter nur leicht abweichenden erfassten Zustand eine Problemlösung in der Fallbasis zu ermitteln.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ferner wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.

Außerdem wird eine Vorrichtung zum Betreiben eines eine Anzahl von Netzwerkelementen umfassenden Stromnetzes mit den Merkmalen des Anspruchs 12 vorgeschlagen.

Die Vorrichtung erlaubt es, kritische Zustände in einem Stromnetz, insbesondere in zeitkritischen Situationen, zu erkennen und Lösungen zur Behebung auf Basis bekannter Fälle zu ermitteln. Zudem ist die Vorrichtung geeignet, kritische Zustände im Stromnetz vorherzusagen und geeignete vorbeugende Maßnahmen zu ermitteln.

Gemäß einer Ausführungsform umfasst die Vorrichtung ein Generierungsmittel zum Generieren mindestens eines zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfassenden Falls, ein Simulationsmittel zum Ausführen einer auf der Zustandsbeschreibung sowie einem elektromechanischen Simulationsmodell basierenden Energie-Fluss-Simulation des Stromnetzes für den mindestens einen generierten Fall zur Ermittlung eines Effektes der zur Behebung des bestimmten Zustands des generierten Falls angegebenen Schalthandlung, ein Wahrscheinlichkeits-Ermittlungsmittel zum Ermitteln einer Wahrscheinlichkeit für ein Eintreten des ermittelten Effekts, ein Evaluierungsmittel zum Ermitteln einer die Eignung der für die zur Behebung des bestimmten Zustands des generierten Falls angegebenen Schalthandlung bestimmenden Maßzahl mittels einer Evaluierung des ermittelten Effekts und ein Speichermittel zum Speichern des generierten Falls sowie des ermittelten Effekts, der ermittelten Wahrscheinlichkeit für das Eintreten des ermittelten Effekts und der ermittelten Maßzahl in der Fallbasis.

Auf diese Weise ist es möglich, die Fallbasis zu erweitern, wobei jeder einzelne der auf diese Weise neu generierten Fälle eine Problembeschreibung sowie eine Problemlösung umfasst.

Gemäß einer weiteren Ausführungsform umfasst die Vorrichtung ein Identifizierungsmittel zum Identifizieren mindestens eines kritischen Zustands des Stromnetzes, ein Generierungsmittel zum Bestimmen mindestens einer möglichen Schalthandlung für zumindest ein Netzwerkelement zur Behebung des kritischen Zustands, ein Simulationsmittel zum Ausführen einer auf einer Zustandsbeschreibung des kritischen Zustands des Stromnetzes sowie einem elektromechanischen Simulationsmodell basierenden Energie-Fluss-Simulation des Stromnetzes zur Ermittlung eines Effektes der zur Behebung des kritischen Zustands generierten Schalthandlung, ein Wahrscheinlichkeits-Ermittlungsmittel zum Ermitteln einer Wahrscheinlichkeit für ein Eintreten des ermittelten Effekts, ein Evaluierungsmittel Ermitteln einer die Eignung der für die zur Behebung des kritischen Zustands generierte Schalthandlung definierenden Maßzahl mittels einer Evaluierung des ermittelten Effekts und ein Speichermittel zum Speichern des kritischen Zustands des Stromnetzes, falls die ermittelte Maßzahl einen Wert unterhalb eines vorgegebenen Grenzwertes aufweist.

Auf diese Weise ist es möglich, während des laufenden Betriebs des Stromnetzes vorbeugend potenziell kritische Zustände zu erkennen und geeignete Maßnahmen, das heißt Schalthandlungen, zu ermitteln, um für den Fall eines tatsächlich eintretenden potenziell kritischen Zustands schnell auf Basis der dann schon in der Fallbasis gespeicherten Problemlösung handeln zu können.

Das Identifizierungsmittel zur Identifizierung potenziell kritischer Zustände ist beispielsweise als ein Static Probabilistic Network Analysis-Werkzeug ausgebildet, wie beispielsweise PRACTICE (Ciapessoni et al., Simulation approaches in cascading risk assessment, Proceedings of PMAPS, 2012).

Das jeweilige Mittel, Erfassungsmittel, Ermittlungsmittel, Anweisungsmittel, Generierungsmittel, Simulationsmittel, Wahrscheinlichkeits-Ermittlungsmittel, Speichermittel, Identifizierungsmittel und Evaluierungsmittel, kann hardwaretechnisch und/oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Die Erfindung ist durch die Merkmale der unabhängigen Ansprüche definiert. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Ablaufdiagramm eines Ausführungsbeispiels eines Verfahrens zum Betreiben eines Stromnetzes;
- Fig. 2: zeigt ein Blockschaltdiagramm eines Ausführungsbeispiels einer Vorrichtung zum Betreiben eines Stromnetzes;
- Fig. 3: zeigt ein Ablaufdiagramm eines weiteren Ausführungsbeispiels eines Verfahrens zum Betreiben eines Stromnetzes;
- Fig. 4: zeigt ein Ablaufdiagramm eines weiteren Ausführungsbeispiels eines Verfahrens zum Betreiben eines Stromnetzes;
- Fig. 5: zeigt ein Ablaufdiagramm eines weiteren Ausführungsbeispiels eines Verfahrens zum Betreiben eines Stromnetzes; und
- Fig. 6: zeigt ein Ablaufdiagramm eines weiteren Ausführungsbeispiels eines Verfahrens zum Betreiben eines Stromnetzes.

In den Figuren sind gleiche oder funktionsgleiche Elemente mit denselben Bezugszeichen versehen worden, sofern nichts anderes angegeben ist.

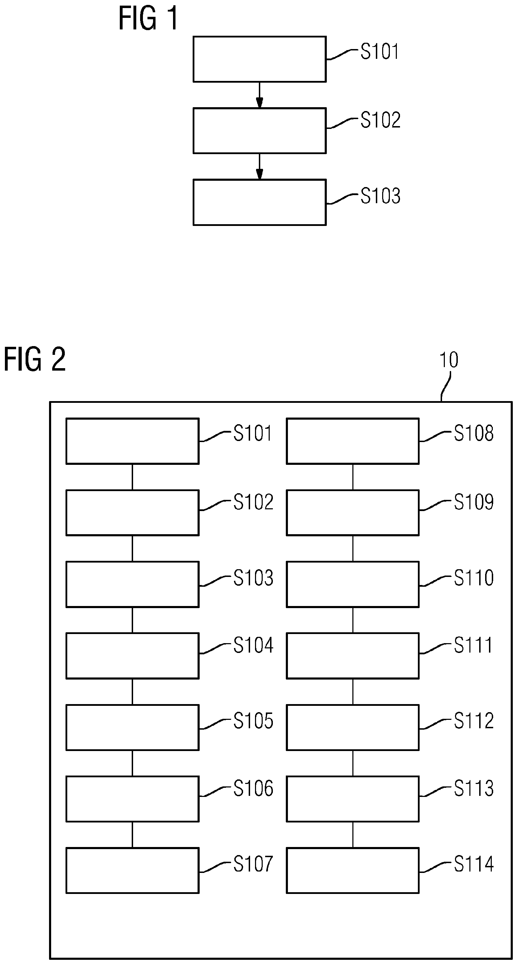

Fig. 1 zeigt ein Ablaufdiagramm eines Ausführungsbeispiels eines Verfahrens zum Betreiben eines Stromnetzes.

Das Stromnetz umfasst dabei eine Anzahl von Netzwerkelementen. Dem Verfahren liegt eine Fallbasis zugrunde, die eine Anzahl von Fällen umfasst. Ein jeweiliger Fall der Fallbasis umfasst zumindest eine Zustandsbeschreibung eines bestimmten Zustands des Stromnetzes sowie zumindest eine Angabe einer Schalthandlung für zumindest ein Netzwerkelement zur Behebung des bestimmten Zustands.

In Schritt S101 wird ein Zustand des Stromnetzes erfasst.

In Schritt S102 wird ein von der Fallbasis umfasster Fall ermittelt, indem der erfasste Zustand mit den von den Fällen der Fallbasis umfassten Zustandsbeschreibungen verglichen wird.

In Schritt S103 wird die zumindest eine für den ermittelten Fall zur Behebung des bestimmten Zustands angegebene Schalthandlung mittels eines Bildschirms in einer Leitwarte für einen Benutzer angezeigt.

Fig. 2 zeigt ein Blockschaltdiagramm eines Ausführungsbeispiels einer Vorrichtung 10 zum Betreiben eines Stromnetzes.

Die Vorrichtung 10 umfasst ein Erfassungsmittel S101 zum Erfassen eines Zustands des Stromnetzes. Weiterhin umfasst die Vorrichtung 10 ein Ermittlungsmittel S102 zum Ermitteln eines von der Fallbasis umfassten Falls durch ein Vergleichen des erfassten Zustands mit den von den Fällen der Fallbasis umfassten Zustandsbeschreibungen. Ferner umfasst die Vorrichtung 10 ein Anweisungsmittel S103 zum Anweisen der zumindest einen für den ermittelten Fall zur Behebung des bestimmten Zustands angegebenen Schalthandlung für das zumindest eine Netzwerkelement zur Behebung des erfassten Zustands des Stromnetzes.

Des Weiteren umfasst die Vorrichtung 10 ein Generierungsmittel S104 zum Generieren mindestens eines zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfassenden Falls.

Die Vorrichtung 10 umfasst zudem ein Simulationsmittel S105 zum Ausführen einer auf der Zustandsbeschreibung sowie einem elektromechanischen Simulationsmodell basierenden Energie-Fluss-Simulation des Stromnetzes für den mindestens einen generierten Fall zur Ermittlung eines Effektes der zur Behebung des bestimmten Zustands des generierten Falls angegebenen Schalthandlung.

Weiterhin umfasst die Vorrichtung 10 ein Wahrscheinlichkeits-Ermittlungsmittel S106 zum Ermitteln einer Wahrscheinlichkeit für ein Eintreten des ermittelten Effekts.

Die Vorrichtung 10 umfasst zudem ein Evaluierungsmittel S107 zum Ermitteln einer die Eignung der für die zur Behebung des bestimmten Zustands des generierten Falls angegebenen Schalthandlung bestimmenden Maßzahl mittels einer Evaluierung des ermittelten Effekts.

Ferner umfasst die Vorrichtung 10 ein Speichermittel S108 zum Speichern des generierten Falls sowie des ermittelten Effekts, der ermittelten Wahrscheinlichkeit für das Eintreten des ermittelten Effekts und der ermittelten Maßzahl in der Fallbasis.

Zudem umfasst die Vorrichtung 10 ein Identifizierungsmittel S109 zum Identifizieren mindestens eines kritischen Zustands des Stromnetzes.

Weiterhin umfasst die Vorrichtung 10 ein Generierungsmittel S110 zum Bestimmen mindestens einer möglichen Schalthandlung für zumindest ein Netzwerkelement zur Behebung des kritischen Zustands.

Die Vorrichtung 10 umfasst zudem ein Simulationsmittel S111 zum Ausführen einer auf einer Zustandsbeschreibung des kritischen Zustands des Stromnetzes sowie einem elektromechanischen Simulationsmodell basierenden Energie-Fluss-Simulation des Stromnetzes zur Ermittlung eines Effektes der zur Behebung des kritischen Zustands generierten Schalthandlung.

Zudem umfasst die Vorrichtung 10 ein Wahrscheinlichkeits-Ermittlungsmittel S112 zum Ermitteln einer Wahrscheinlichkeit für ein Eintreten des ermittelten Effekts.

Die Vorrichtung 10 umfasst weiterhin ein Evaluierungsmittel S113 zum Ermitteln einer die Eignung der für die zur Behebung des kritischen Zustands generierte Schalthandlung definierenden Maßzahl mittels einer Evaluierung des ermittelten Effekts.

Zudem umfasst die Vorrichtung 10 ein Speichermittel S114 zum Speichern des kritischen Zustands des Stromnetzes, falls die ermittelte Maßzahl einen Wert unterhalb eines vorgegebenen Grenzwertes aufweist.

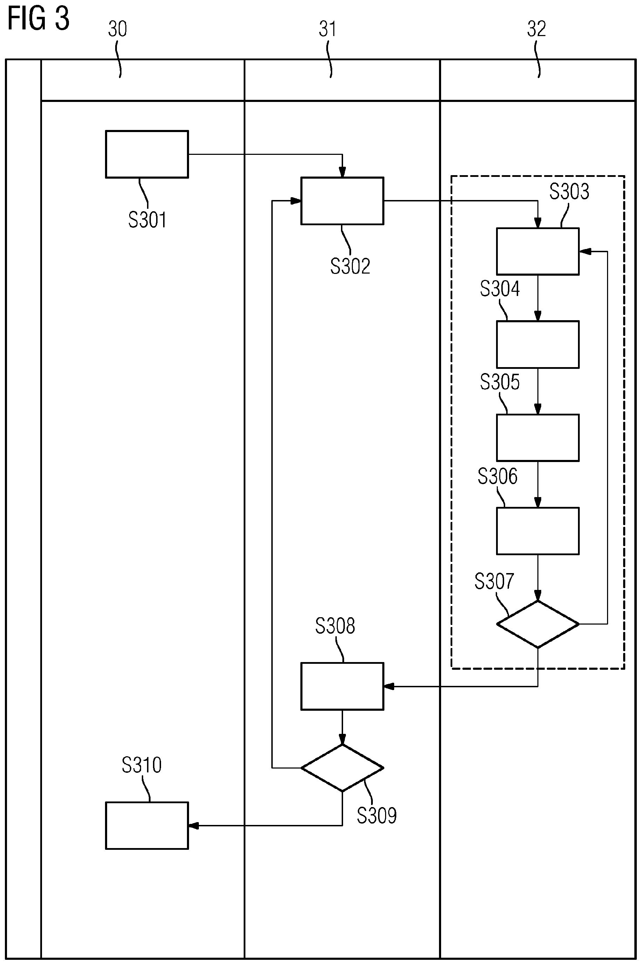

Fig. 3 zeigt ein Ablaufdiagramm eines weiteren Ausführungsbeispiels eines Verfahrens zum Betreiben eines Stromnetzes.

Das vorgeschlagene Verfahren wird im Rahmen einer Trainingsphase initialisiert, in deren Rahmen die Fallbasis aufgebaut wird.

Die Trainingsphase wird durch eine in Fig. 3 dargestellte Trainings-Anwendung 30 (Training Application) angestoßen. Dies geschieht in Schritt S301.

Daraufhin wird in Schritt S302 ein Testfall durch eine Case Based Reasoning-Komponente 31 generiert. Ein Testfall umfasst dabei eine Zustandsbeschreibung eines bestimmten Zustands des Stromnetzes sowie eine Angabe einer Schalthandlung für ein Netzwerkelement des Stromnetzes, die zur Behebung des bestimmten Zustands dient.

Dieser Testfall wird an eine Simulations-Komponente 32 übergeben.

In Schritt S303 erfolgt eine konkrete Konfiguration der den bestimmten Zustand kennzeichnenden Stromnetz-Parameter des Testfalls, wie beispielsweise Angaben zu Spannung oder Last einer oder mehrerer Leitungen des Stromnetzes.

In Schritt S304 wird eine auf der Zustandsbeschreibung des bestimmten Zustands sowie einem elektromechanischen Simulationsmodell basierende Energie-Fluss-Simulation des Stromnetzes ausgeführt. Ergebnis der Simulation ist ein Effekt beziehungsweise ein Ergebnis der zur Behebung des bestimmten Zustands des generierten Falls angegebenen Schalthandlung.

In Schritt S305 wird eine Wahrscheinlichkeit für ein Eintreten des ermittelten Effekts ermittelt.

In Schritt S306 wird eine die Eignung der angegebenen Schalthandlung bestimmende Maßzahl mittels einer Evaluierung des ermittelten Effekts ermittelt. Dabei wird geprüft, ob die Schalthandlung geeignet ist, den bestimmten Zustand zu beheben und das Stromnetz wieder in einen stabilen Zustand zu versetzen, oder ob die Schalthandlung dazu nicht geeignet ist.

Die Schritte S303-S306 werden in der Trainingsphase mehrfach ausgeführt. Auf diese Weise wird eine so genannte Ensemble-Simulation ausgeführt, bei der in jeder Ausführung des Schrittes S303 die den bestimmten Zustand definierenden Stromnetz-Parameter innerhalb eines vorgegebenen Variationsbereichs variiert werden. Im Rahmen der Ensemble-Simulation werden somit mehrere einzelne Energie-Fluss-Simulationen ausgeführt, jeweils für eine Variation des bestimmten Zustands. Die Ergebnisse der einzelnen Energie-Fluss-Simulationen der Ensemble-Simulation werden anschließend in geeigneter Weise zusammengeführt. Beispielsweise werden solange Variationen des bestimmten Zustands erzeugt, für die jeweils eine Simulation ausgeführt wird, bis die Ergebnisse der einzelnen Simulationen konvergieren. Dies wird in Schritt S307 überprüft.

Ist dies der Fall, wird der Testfall in Schritt S308 in der Fallbasis gespeichert. Dabei werden auch der ermittelte Effekt und die ermittelte Wahrscheinlichkeit für das Eintreten des Effekts sowie die Maßzahl, die die Eignung der angegebenen Schalthandlung bestimmt, gespeichert.

In Schritt S309 überprüft die Case Based Reasoning-Komponente 31, ob noch weitere Fälle zu generieren sind, oder ob die Fallbasis vollständig ist. Dazu können bestimmte Kriterien vorgegeben werden. Beispielsweise endet die Trainingsphase, wenn der gesamte oder zumindest ein Teil des gesamten Zustandsraums für das Stromnetz untersucht worden ist. In diesem Fall endet die Trainingsphase in Schritt S310. Anderenfalls fährt die Case Based Reasoning-Komponente 31 mit Schritt S302 und der Generierung eines weiteren Testfalls fort.

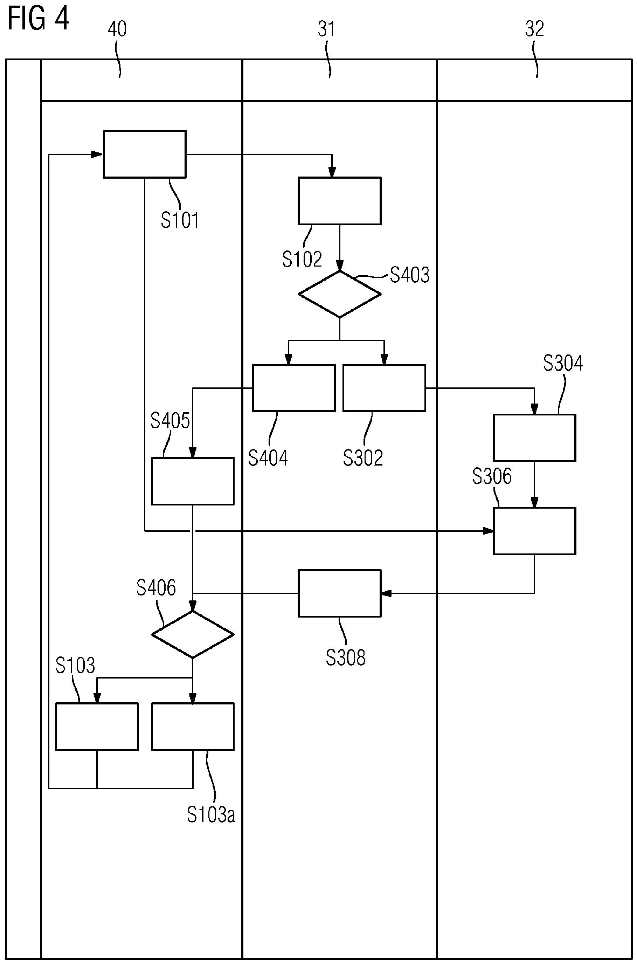

Fig. 4 zeigt ein Ablaufdiagramm eines weiteren Ausführungsbeispiels eines Verfahrens zum Betreiben eines Stromnetzes.

Die Fig. 4 zeigt die Abwehr-Applikation 40 (Defense Application). Die Abwehr-Applikation 40 dient dazu, kritische Zustände des Stromnetzes zu erkennen und zu beheben.

Zu diesem Zweck wird in Schritt S101 der aktuelle Zustand des Stromnetzes erfasst.

Es ist möglich, dass das Verfahren direkt zu Schritt S306 springt, so dass eine Bewertung bestimmter vorgenommener Schalthandlungen erfolgt, die beispielsweise manuell ausgeführt wurden.

Nachdem der aktuelle Zustand des Stromnetzes erfasst wurde, wird der erfasste Zustand an die Case Based Reasoning-Komponente 31 übergeben, die in Schritt S102 einen ähnlichen Fall aus der Fallbasis ermittelt.

In Schritt S403 wird überprüft, ob ein entsprechender Fall aus der Fallbasis ermittelt werden konnte und/oder ob der ermittelte Fall eine genügend hohe Ähnlichkeit zu dem aktuell erfassten Zustand des Stromnetzes aufweist.

Falls ein genügend ähnlicher Fall ermittelt werden konnte, fährt das Verfahren mit Schritt S404 fort. In Schritt S404 werden die Top-k Schalthandlungen ermittelt, die für den ermittelten Fall angegeben sind. Es werden also die k besten Schalthandlungen ermittelt.

In Schritt S405 werden die Top-k Schalthandlungen anhand eines bestimmten Kriteriums bewertet und basierend auf den Bewertungen sortiert. Es ist möglich, die Ergebnisliste der so erhaltenen Schalthandlungen weitergehend zu verarbeiten, beispielsweise in dem ein Majority Vote-Verfahren zur Anwendung kommt, bei dem die am häufigsten in der Ergebnisliste vertretene Schalthandlung ausgewählt wird. Es kann auch die gesamte Liste der Schalthandlungen weitergereicht werden.

In Schritt S406 wird überprüft, ob die zuvor vorgenommene Evaluierung der Schalthandlungen fehlerfrei erfolgt ist. Ist dies der Fall, werden die betreffenden Schalthandlungen in Schritt S103 angezeigt. Ist dies nicht der Fall, konnte also keine Evaluierung vorgenommen werden, erfolgt in Schritt S103a eine Anzeige des erkannten Problems sowie gegebenenfalls möglicher Lösungen. Danach kehrt das Verfahren zurück zu Schritt S101, um den aktuellen Zustand des Stromnetzes zu erfassen.

Falls in Schritt S403 kein genügend ähnlicher Fall ermittelt werden konnte, fährt das Verfahren mit Schritt S302 fort.

In Schritt S302, wird wie oben dargestellt, ein Testfall generiert, der an die Simulations-Komponente 32 übergeben wird. Im Unterschied zur oben dargestellten Trainingsphase erfolgt im Fall der Abwehr-Applikation 40 jedoch keine Ensemble-Simulation.

Stattdessen wird in Schritt S304 nur eine Einzelsimulation für den vorliegenden Testfall ausgeführt, deren Ergebnisse in Schritt S306 evaluiert werden.

Im Anschluss wird der Testfall, wie oben dargestellt, in Schritt S308 in der Fallbasis gespeichert.

Das Verfahren fährt sodann mit Schritt S406 wie oben beschrieben fort.

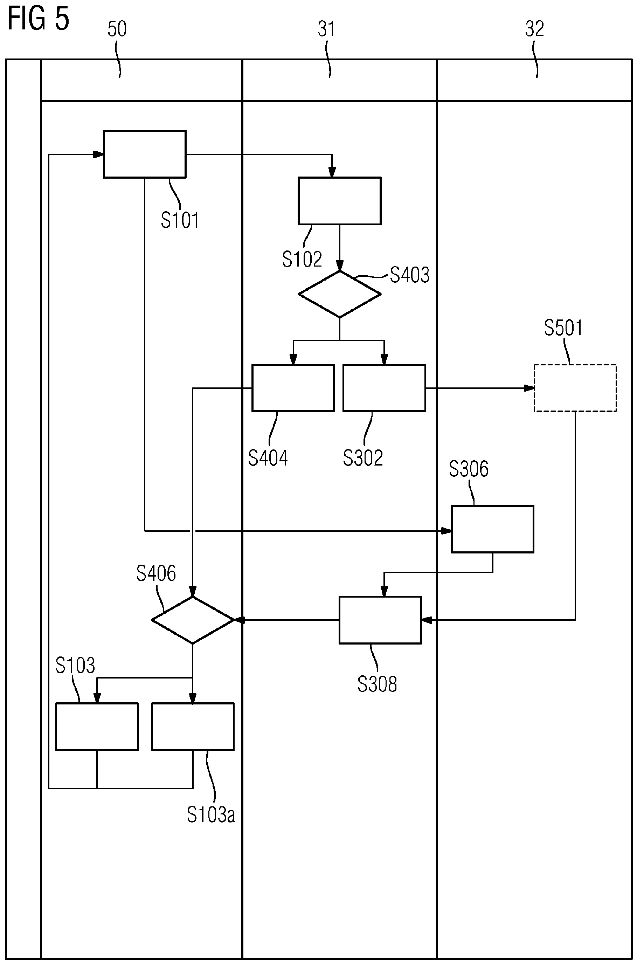

Fig. 5 zeigt ein Ablaufdiagramm eines weiteren Ausführungsbeispiels eines Verfahrens zum Betreiben eines Stromnetzes.

Fig. 5 zeigt die Wiederherstellungs-Applikation 50 (Restoration Application), die zum Einsatz kommt, wenn beispielsweise ein Stromausfall vorliegt und das Stromnetz wieder hochgefahren werden soll.

Das Verfahren startet, wie oben dargestellt, mit Schritt S101, in dem der aktuelle Zustand des Stromnetzes erfasst wird. Die weiteren in Fig. 5 dargestellten Schritte S102, S403, S404, S406, S103, S103a, S302, S306 und S308 entsprechen den oben dargestellten Schritten der Figur 4.

Im Unterschied zu der in Fig. 4 dargestellten Abwehr-Applikation 40 wird in der Wiederherstellungs-Applikation 50 jedoch nicht eine Einzel-Simulation für den von der Case Based Reasoning-Komponente generierten Testfall ausgeführt, sondern wie für die Trainings-Applikation 30 oben dargestellt eine Ensemble-Simulation. Diese Ensemble-Simulation wird in Schritt S501 ausgeführt und ist in Fig. 5 vereinfacht dargestellt. Die einzelnen Schritte der Ensemble-Simulation in Schritt S501 entsprechen den oben für die Trainings-Applikation 30 dargestellten Schritten S303-S307.

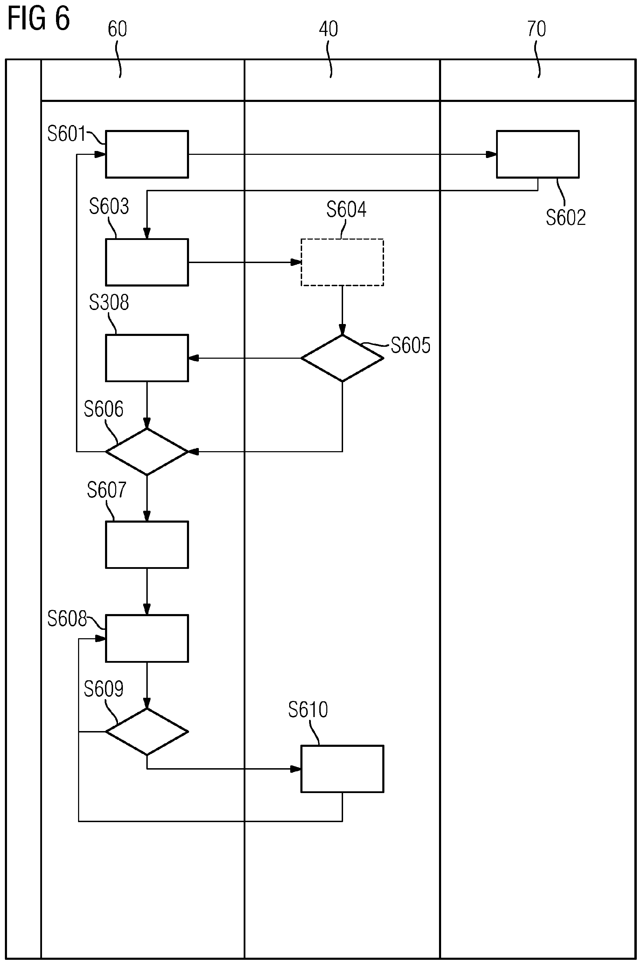

Fig. 6 zeigt ein Ablaufdiagramm eines weiteren Ausführungsbeispiels eines Verfahrens zum Betreiben eines Stromnetzes.

Fig. 6 zeigt die Rekonfigurations-Applikation 60 (Reconfiguration Application), die zur vorbeugenden Rekonfiguration des Stromnetzes dient.

In Schritt S601 wird eine Lernphase für die Rekonfigurations-Applikation 60 initialisiert.

Daraufhin werden in Schritt S602 potenziell kritische Zustände des Stromnetzes identifiziert. Zu diesem Zweck wird ein Werkzeug 70 zur probabilistischen Netzwerkanalyse eingesetzt, wie beispielsweise das PRACTICE-Werkzeug.

Ausgabe des Werkzeuges 70 und damit des Schrittes S602 ist eine Liste potenziell kritischer Zustände des Stromnetzes, für deren Behebung in Schritt S603 mögliche Schalthandlungen bestimmt werden. Dies kann beispielsweise manuell durch technisches Personal geschehen.

In dem von der Abwehr-Applikation 40 ausgeführten Schritt S604 wird ein Teil der zu der Abwehr-Applikation 40 gehörenden Schritte ausgeführt, nämlich die Schritte S304 (Ausführen einer Simulation), S305 (Ermitteln einer Wahrscheinlichkeit für den ermittelten Effekt) und S306 (Ermitteln einer Maßzahl für die Eignung der Schalthandlung).

In Schritt S605 wird anschließend überprüft, ob die simulierte Abwehr anhand der simulierten Schalthandlungen für den kritischen Zustand erfolgreich war oder nicht.

Nicht gelöste kritische Zustände werden in Schritt S308 gespeichert.

War eine simulierte Abwehr in Schritt S604 erfolgreich, wird in Schritt S606 überprüft, ob eine vorgegebene Abbruchbedingung erfüllt ist. Falls nicht, fährt das Verfahren in Schritt S601 fort und startet eine weitere Analyse hinsichtlich potenziell kritischer Zustände des Stromnetzes.

Ist die Abbruchbedingung erfüllt, wird in Schritt S607 ein Rekonfigurations-Kontroller initialisiert, der das Stromnetz daraufhin überwacht.

Erfasst der Rekonfigurations-Kontroller in Schritt S608 einen Zustand, der in Schritt S609 als einem zuvor gespeicherten potenziell kritischen Zustand ähnlich erkannt wird, leitet er in Schritt S610 die Rekonfiguration des Stromnetzes ein.

Wird der erfasste Zustand in Schritt S609 nicht als potenziell kritisch eingestuft, fährt das Verfahren mit Schritt S608 fort.

## Patentansprüche

1. Verfahren zum Betreiben eines eine Anzahl von Netzwerkelementen umfassenden Stromnetzes unter Verwendung einer eine Anzahl von Fällen umfassenden Fallbasis, wobei ein jeweiliger Fall der Fallbasis zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfasst, mit den Schritten:
- Erfassen (S101) eines Zustands des Stromnetzes,
- Ermitteln (S102) eines von der Fallbasis umfassten Falls durch ein Vergleichen des erfassten Zustands mit den von den Fällen der Fallbasis umfassten Zustandsbeschreibungen, und
- Anweisen (S103) der zumindest einen für den ermittelten Fall zur Behebung des bestimmten Zustands angegebenen Schalthandlung für das zumindest eine Netzwerkelement zur Behebung des erfassten Zustands des Stromnetzes, wobei das Anweisen (S103) der angegebenen Schalthandlung ein automatisches Ausführen der angegebenen Schalthandlung durch eine Schaltvorrichtung zur Steuerung des Stromnetzes umfasst, und das Verfahren **dadurch gekennzeichnet ist, dass** es ein Anzeigen der angegebenen Schalthandlung mittels einer Anzeigevorrichtung für einen Benutzer umfasst, um ein manuelles Eingreifen zu ermöglichen.

2. Verfahren Anspruch 1,
**gekennzeichnet durch**:
ein Erweitern der Fallbasis, umfassend die Schritte:
- Generieren (S302) mindestens eines zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfassenden Falls,
- Ausführen (S304) einer auf der Zustandsbeschreibung sowie einem elektromechanischen Simulationsmodell basierenden Energie-Fluss-Simulation des Stromnetzes für den mindestens einen generierten Fall zur Ermittlung eines Effektes der zur Behebung des bestimmten Zustands des generierten Falls angegebenen Schalthandlung,
- Ermitteln (S305) einer Wahrscheinlichkeit für ein Eintreten des ermittelten Effekts,
- Ermitteln (S306) einer die Eignung der für die zur Behebung des bestimmten Zustands des generierten Falls angegebenen Schalthandlung bestimmenden Maßzahl mittels einer Evaluierung des ermittelten Effekts, und
- Speichern (S308) des generierten Falls sowie des ermittelten Effekts, der ermittelten Wahrscheinlichkeit für das Eintreten des ermittelten Effekts und der ermittelten Maßzahl in der Fallbasis.

3. Verfahren nach Anspruch 2,
**gekennzeichnet durch** mehrfaches Ausführen des Erweiterns der Fallbasis zum Aufbau der Fallbasis.

4. Verfahren nach Anspruch 2 oder 3,
**dadurch gekennzeichnet, dass** das Erweitern der Fallbasis in Form eines nicht überwachten Lernens ausgeführt wird.

5. Verfahren nach Anspruch 2,
**dadurch gekennzeichnet, dass** bei einem ergebnislosen Ermitteln (S102), bei dem ein Zustand erfasst wird, der nicht von der Fallbasis umfasst ist, das Ermitteln (S102) des von der Fallbasis umfassten Falls ferner das Erweitern der Fallbasis umfasst, so dass ein Fall ermittelt wird, indem der erfasste Zustand bearbeitet und das Ergebnis in der Fallbasis gespeichert wird.

6. Verfahren nach einem der vorstehenden Ansprüche,
**dadurch gekennzeichnet, dass** folgende Schritte ausgeführt werden, wenn der ermittelte Fall mehrere Angaben einer Schalthandlung zur Behebung des bestimmten Zustands des Stromnetzes umfasst:
- Ermitteln (S404) einer Teilmenge der mehreren angegebenen Schalthandlungen in Abhängigkeit von einem bestimmten Kriterium,
- Erstellen (S405) einer Bewertung für jede Schalthandlung der Teilmenge der mehreren angegebenen Schalthandlungen,
- Sortieren (S405) der Teilmenge der mehreren angegebenen Schalthandlungen basierend auf den erstellten Bewertungen, und
- Anweisen (S103) der sortieren Teilmenge der mehreren angegebenen Schalthandlungen zur Behebung des erfassten Zustands des Stromnetzes.

7. Verfahren nach einem der vorstehenden Ansprüche, **gekennzeichnet durch**:
- Identifizieren (S602) mindestens eines kritischen Zustands des Stromnetzes,
- Bestimmen (S603) mindestens einer möglichen Schalthandlung für zumindest ein Netzwerkelement zur Behebung des kritischen Zustands,
- Ausführen (S304) einer auf einer Zustandsbeschreibung des kritischen Zustands des Stromnetzes sowie einem elektromechanischen Simulationsmodell basierenden Energie-Fluss-Simulation des Stromnetzes zur Ermittlung eines Effektes der zur Behebung des kritischen Zustands generierten Schalthandlung,
- Ermitteln (S305) einer Wahrscheinlichkeit für ein Eintreten des ermittelten Effekts,
- Ermitteln (S306) einer die Eignung der für die zur Behebung des kritischen Zustands generierte Schalthandlung bestimmenden Maßzahl mittels einer Evaluierung des ermittelten Effekts, und
- Speichern (S308) des kritischen Zustands des Stromnetzes, falls die ermittelte Maßzahl einen Wert unterhalb eines vorgegebenen Grenzwertes aufweist.

8. Verfahren nach Anspruch 7,
**gekennzeichnet durch**
- Einleiten (S610) einer Rekonfiguration des Stromnetzes, falls der identifizierte Zustand des Stromnetzes sich einem gespeicherten kritischen Zustand des Stromnetzes annähert.

9. Verfahren nach einem der Ansprüche 2 - 8,
**dadurch gekennzeichnet, dass** das Ausführen der Energie-Fluss-Simulation in Form einer Ensemble-Simulation (S501) erfolgt, umfassend die Schritte:
- Erzeugen einer Mehrzahl von Variationen des bestimmten Zustands durch Variieren von den bestimmten Zustand definierenden Stromnetz-Parametern innerhalb eines vorgegebenen Variationsbereichs,
- Ausführen einer einzelnen Energie-Fluss-Simulation für jede der Mehrzahl der Variationen des bestimmten Zustands, und
- Zusammenführen der Ergebnisse der einzelnen Energie-Fluss-Simulationen.

10. Computerprogrammprodukt, welches die Durchführung eines Verfahrens nach einem der Ansprüche 1 bis 9 auf einer programmgesteuerten Einrichtung veranlasst.

11. Datenträger mit einem gespeicherten Computerprogramm mit Befehlen, welche die Durchführung eines Verfahrens nach einem der Ansprüche 1 bis 9 auf einer programmgesteuerten Einrichtung veranlassen.

12. Vorrichtung (10) zum Betreiben eines eine Anzahl von Netzwerkelementen umfassenden Stromnetzes unter Verwendung einer eine Anzahl von Fällen umfassenden Fallbasis, wobei ein jeweiliger Fall der Fallbasis zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfasst, mit:
- Erfassungsmittel (101) zum Erfassen (S101) eines Zustands des Stromnetzes,
- Ermittlungsmittel (102) zum Ermitteln (S102) eines von der Fallbasis umfassten Falls durch ein Vergleichen des erfassten Zustands mit den von den Fällen der Fallbasis umfassten Zustandsbeschreibungen, und
- Anweisungsmittel (103) zum Anweisen (S103) der zumindest einen für den ermittelten Fall zur Behebung des bestimmten Zustands angegebenen Schalthandlung für das zumindest eine Netzwerkelement zur Behebung des erfassten Zustands des Stromnetzes, wobei das Anweisen (S103) der angegebenen Schalthandlung ein automatisches Ausführen der angegebenen Schalthandlung durch eine Schaltvorrichtung zur Steuerung des Stromnetzes umfasst, wobei die Vorrichtung **dadurch gekennzeichnet ist, dass** das Anweisungsmittel (103) ferner eingerichtet ist für ein Anzeigen der angegebenen Schalthandlung mittels einer Anzeigevorrichtung für einen Benutzer, um ein manuelles Eingreifen zu ermöglichen.

13. Vorrichtung nach Anspruch 12,
**gekennzeichnet durch**:
- Generierungsmittel (104) zum Generieren mindestens eines zumindest eine Zustandsbeschreibung eines bestimmten Zustands des Stromnetzes sowie zumindest eine Angabe einer Schalthandlung für zumindest ein Netzwerkelement zur Behebung des bestimmten Zustands umfassenden Falls,
- Simulationsmittel (105) zum Ausführen einer auf der Zustandsbeschreibung sowie einem elektromechanischen Simulationsmodell basierenden Energie-Fluss-Simulation des Stromnetzes für den mindestens einen generierten Fall zur Ermittlung eines Effektes der zur Behebung des bestimmten Zustands des generierten Falls angegebenen Schalthandlung,
- Wahrscheinlichkeits-Ermittlungsmittel (106) zum Ermitteln einer Wahrscheinlichkeit für ein Eintreten des ermittelten Effekts,
- Evaluierungsmittel (107) zum Ermitteln einer die Eignung der für die zur Behebung des bestimmten Zustands des generierten Falls angegebenen Schalthandlung bestimmenden Maßzahl mittels einer Evaluierung des ermittelten Effekts, und
- Speichermittel (108) zum Speichern des generierten Falls sowie des ermittelten Effekts, der ermittelten Wahrscheinlichkeit für das Eintreten des ermittelten Effekts und der ermittelten Maßzahl in der Fallbasis.

14. Vorrichtung nach Anspruch 12 oder 13,
**gekennzeichnet durch**:
- Identifizierungsmittel (109) zum Identifizieren mindestens eines kritischen Zustands des Stromnetzes,
- Generierungsmittel (110) zum Bestimmen mindestens einer möglichen Schalthandlung für zumindest ein Netzwerkelement zur Behebung des kritischen Zustands,
- Simulationsmittel (111) zum Ausführen einer auf einer Zustandsbeschreibung des kritischen Zustands des Stromnetzes sowie einem elektromechanischen Simulationsmodell basierenden Energie-Fluss-Simulation des Stromnetzes zur Ermittlung eines Effektes der zur Behebung des kritischen Zustands generierten Schalthandlung,
- Wahrscheinlichkeits-Ermittlungsmittel (112) zum Ermitteln einer Wahrscheinlichkeit für ein Eintreten des ermittelten Effekts,
- Evaluierungsmittel (113) zum Ermitteln einer die Eignung der für die zur Behebung des kritischen Zustands generierte Schalthandlung definierenden Maßzahl mittels einer Evaluierung des ermittelten Effekts, und
- Speichermittel (114) zum Speichern des kritischen Zustands des Stromnetzes, falls die ermittelte Maßzahl einen Wert unterhalb eines vorgegebenen Grenzwertes aufweist.

## Claims

1. Method for operating a power network which comprises a number of network elements using a case base comprising a number of cases, a respective case in the case base comprising at least one state description of a particular state of the power network and at least one statement of a switching action for at least one network element for the purpose of rectifying the particular state, having the steps of:
- detecting (S101) a state of the power network,
- determining (S102) a case included in the case base by comparing the detected state with the state descriptions included in the cases in the case base, and
- assigning (S103) the at least one switching action, which is stated for the determined case for the purpose of rectifying the particular state, for the at least one network element for the purpose of rectifying the detected state of the power network, the process of assigning (S103) the stated switching action comprising automatic execution of the stated switching action by a switching apparatus for the purpose of controlling the power network, and the method being **characterized in that** it comprises displaying the stated switching action by means of a display apparatus for a user in order to enable manual intervention.

2. Method according to Claim 1,
**characterized by**:
expansion of the case base, comprising the steps of:
- generating (S302) at least one case which comprises at least one state description of a particular state of the power network and at least one statement of a switching action for at least one network element for the purpose of rectifying the particular state,
- executing (S304) an energy flow simulation of the power network, which is based on the state description and an electromechanical simulation model, for the at least one generated case for the purpose of determining an effect of the switching action stated for the purpose of rectifying the particular state of the generated case,
- determining (S305) a probability of an occurrence of the determined effect,
- determining (S306) a measured value, which determines the suitability of the switching action stated for the purpose of rectifying the particular state of the generated case, by evaluating the determined effect, and
- storing (S308) the generated case as well as the determined effect, the determined probability of the occurrence of the determined effect and the determined measured value in the case base.

3. Method according to Claim 2,
**characterized by** repeated expansion of the case base in order to construct the case base.

4. Method according to Claim 2 or 3,
**characterized in that** the case base is expanded in the form of learning which is not monitored.

5. Method according to Claim 2,
**characterized in that**, in the event of fruitless determination (S102) in which a state is detected which is not included in the case base, the determination (S102) of the case included in the case base also comprises expanding the case base, with the result that a case is determined by processing the detected state and storing the result in the case base.

6. Method according to one of the preceding claims,
**characterized in that** the following steps are carried out if the determined case comprises a plurality of statements of a switching action for the purpose of rectifying the particular state of the power network:
- determining (S404) a subset of the plurality of stated switching actions on the basis of a particular criterion,
- creating (S405) an assessment for each switching action in the subset of the plurality of stated switching actions,
- sorting (S405) the subset of the plurality of stated switching actions on the basis of the created assessments, and
- assigning (S103) the sorted subset of the plurality of stated switching actions for the purpose of rectifying the detected state of the power network.

7. Method according to one of the preceding claims,
**characterized by**:
- identifying (S602) at least one critical state of the power network,
- determining (S603) at least one possible switching action for at least one network element for the purpose of rectifying the critical state,
- executing (S304) an energy flow simulation of the power network, which is based on a state description of the critical state of the power network and an electromechanical simulation model, for the purpose of determining an effect of the switching action generated for the purpose of rectifying the critical state,
- determining (S305) a probability of an occurrence of the determined effect,
- determining (S306) a measured value, which determines the suitability of the switching action generated for the purpose of rectifying the critical state, by evaluating the determined effect, and
- storing (S308) the critical state of the power network if the determined measured value has a value below a predefined limit value.

8. Method according to Claim 7,
**characterized by**
- initiating (S610) reconfiguration of the power network if the identified state of the power network approaches a stored critical state of the power network.

9. Method according to one of Claims 2-8,
**characterized in that** the energy flow simulation is executed in the form of an ensemble flow simulation (S501), comprising the steps of:
- generating a plurality of variations of the particular state by varying power network parameters, which define the particular state, within a predefined variation range,
- executing an individual energy flow simulation for each of the plurality of variations of the particular state, and
- combining the results of the individual energy flow simulations.

10. Computer program product which causes a method according to one of Claims 1 to 9 to be carried out on a program-controlled device.

11. Data storage medium having a stored computer program with instructions which cause a method according to one of Claims 1 to 9 to be carried out on a program-controlled device.

12. Apparatus (10) for operating a power network which comprises a number of network elements using a case base comprising a number of cases, a respective case in the case base comprising at least one state description of a particular state of the power network and at least one statement of a switching action for at least one network element for the purpose of rectifying the particular state, having:
- detection means (101) for detecting (S101) a state of the power network,
- determination means (102) for determining (S102) a case included in the case base by comparing the detected state with the state descriptions included in the cases in the case base, and
- assignment means (103) for assigning (S103) the at least one switching action, which is stated for the determined case for the purpose of rectifying the particular state, for the at least one network element for the purpose of rectifying the detected state of the power network, the process of assigning (S103) the stated switching action comprising automatic execution of the stated switching action by a switching apparatus for the purpose of controlling the power network, the apparatus being **characterized in that** the assignment means (103) is also set up to display the stated switching action by means of a display apparatus for a user in order to enable manual intervention.

13. Apparatus according to Claim 12,
**characterized by**:
- generation means (104) for generating at least one case which comprises at least one state description of a particular state of the power network and at least one statement of a switching action for at least one network element for the purpose of rectifying the particular state,
- simulation means (105) for executing an energy flow simulation of the power network, which is based on the state description and an electromechanical simulation model, for the at least one generated case for the purpose of determining an effect of the switching action stated for the purpose of rectifying the particular state of the generated case,
- probability determination means (106) for determining a probability of an occurrence of the determined effect,
- evaluation means (107) for determining a measured value, which determines the suitability of the switching action stated for the purpose of rectifying the particular state of the generated case, by evaluating the determined effect, and
- storage means (108) for storing the generated case as well as the determined effect, the determined probability of the occurrence of the determined effect and the determined measured value in the case base.

14. Apparatus according to Claim 12 or 13,
**characterized by**:
- identification means (109) for identifying at least one critical state of the power network,
- generation means (110) for determining at least one possible switching action for at least one network element for the purpose of rectifying the critical state,
- simulation means (111) for executing an energy flow simulation of the power network, which is based on a state description of the critical state of the power network and an electromechanical simulation model, for the purpose of determining an effect of the switching action generated for the purpose of rectifying the critical state,
- probability determination means (112) for determining a probability of an occurrence of the determined effect,
- evaluation means (113) for determining a measured value, which defines the suitability of the switching action generated for the purpose of rectifying the critical state, by evaluating the determined effect, and
- storage means (114) for storing the critical state of the power network if the determined measured value has a value below a predefined limit value.

## Revendications

1. Procédé pour faire fonctionner un réseau électrique comprenant un certain nombre d'éléments de réseau en utilisant une base de cas comprenant un certain nombre de cas, un cas respectif de ladite base de cas comprenant au moins une description d'état d'un état déterminé du réseau électrique et au moins une indication d'une action de commutation pour au moins un élément de réseau pour corriger l'état déterminé, comprenant les étapes :
- détecter (S101) un état du réseau électrique,
- déterminer (S102) un cas compris dans la base de cas en comparant l'état détecté aux descriptions d'état comprises dans la base de cas, et
- commander (S103) la au moins une action de commutation indiquée pour le cas déterminé pour corriger l'état déterminé pour le au moins un élément de réseau afin de corriger l'état détecté du réseau électrique, la commande (S103) de l'action de commutation indiquée comprenant une exécution automatique de l'action de commutation indiquée par un dispositif de commutation permettant de piloter le réseau électrique, et le procédé étant **caractérisé en ce qu'**il comprend un affichage de l'action de commutation indiquée au moyen d'un dispositif d'affichage pour un utilisateur afin de permettre une intervention manuelle.

2. Procédé selon la revendication 1,
**caractérisé par**
un élargissement de la base de cas, comprenant les étapes :
- générer (S302) au moins un cas comprenant au moins une description d'état d'un état déterminé du réseau électrique ainsi qu'au moins une indication d'une action de commutation pour un élément de réseau pour corriger l'état déterminé,
- exécuter (S304) une simulation énergie-flux du réseau électrique basée sur la description d'état ainsi que sur un modèle de simulation électromécanique pour ledit au moins un cas généré afin de déterminer un effet de l'action de commutation indiquée pour corriger l'état déterminé du cas généré,
- déterminer (S305) une probabilité de survenance de l'effet déterminé,
- déterminer (S306) un chiffre d'indice définissant l'aptitude de l'action de commutation indiquée pour corriger l'état déterminé du cas généré, et
- mémoriser (S308) dans la base de cas le cas généré ainsi que l'effet déterminé, la probabilité déterminée de la survenance de l'effet déterminé et le chiffre d'indice déterminé.

3. Procédé selon la revendication 2,
**caractérisé par** une exécution multiple de l'élargissement de la base de cas pour développer la base de cas.

4. Procédé selon la revendication 2 ou 3,
**caractérisé en ce que** le développement de la base de cas est réalisé sous la forme d'un apprentissage non surveillé.

5. Procédé selon la revendication 2,
**caractérisé en ce qu'**en cas de détermination sans résultat (S102) consistant à détecter un état qui n'est pas compris dans la base de cas, la détermination (S102) du cas compris dans la base de cas comprend en outre l'élargissement de la base de cas, de sorte à déterminer un cas en traitant l'état détecté et en mémorisant le résultat dans la base de cas.

6. Procédé selon l'une des revendications précédentes,
**caractérisé en ce que** les étapes suivantes sont effectuées si le cas déterminé comprend une pluralité d'indications d'une action de commutation pour corriger l'état déterminé du réseau électrique :
- déterminer (S404) un sous-ensemble des actions de commutation indiquées en fonction d'un critère déterminé,
- établir (S405) une évaluation pour chaque action de commutation du sous-ensemble de la pluralité d'actions de commutation indiquées,
- classer (S405) le sous-ensemble de la pluralité d'actions de commutation indiquées sur la base des évaluations établies, et
- commander (S103) le sous-ensemble classé de la pluralité d'actions de commutation indiquées pour corriger l'état détecté du réseau électrique.

7. Procédé selon l'une des revendications précédentes,
**caractérisé par** :
- identifier (S602) au moins un état critique du réseau électrique,
- déterminer (S603) au moins une possible action de commutation pour au moins un élément de réseau pour corriger l'état critique,
- exécuter (S304) une simulation énergie-flux du réseau électrique basée sur une description d'état de l'état critique ainsi que sur un modèle de simulation électromécanique afin de déterminer un effet de l'action de commutation générée pour corriger l'état critique,
- déterminer (S305) une probabilité de survenance de l'effet déterminé,
- déterminer (S306) un chiffre d'indice définissant l'aptitude de l'action de commutation générée pour corriger l'état critique au moyen d'une évaluation de l'effet déterminé, et
- mémoriser (S308) le cas critique du réseau électrique si le chiffre d'indice déterminé présente une valeur inférieure à une valeur limite prédéfinie.

8. Procédé selon la revendication 7,
**caractérisé par**
- initier (S610) une reconfiguration du réseau électrique si l'état identifié du réseau électrique s'approche d'un état critique mémorisé du réseau électrique.

9. Procédé selon l'une des revendications 2 à 8,
**caractérisé en ce que** l'exécution de la simulation énergie-flux s'effectue sous la forme d'une simulation d'ensemble (S501), comprenant les étapes :
- générer une pluralité de variations de l'état déterminé en faisant varier des paramètres définissant l'état déterminé du réseau électrique à l'intérieur d'une plage de variation prédéfinie,
- exécuter une seule simulation énergie-flux pour chacune de la pluralité des variations de l'état déterminé, et
- regrouper les résultats des différentes simulations énergie-flux.

10. Produit programme informatique déclenchant la mise en oeuvre d'un procédé selon l'une des revendications 1 à 9 sur un dispositif commandé par programme.

11. Support de données comportant un programme informatique mémorisé avec des instructions déclenchant la mise en oeuvre d'un procédé selon l'une des revendications 1 à 9 sur un dispositif commande par programme.

12. Dispositif (10) pour faire fonctionner un réseau électrique comprenant un certain nombre d'éléments de réseau en utilisant une base de cas comprenant un certain nombre de cas, un cas respectif de la base de cas comprenant au moins une description d'état d'un état déterminé du réseau électrique ainsi qu'au moins une indication d'une action de commutation pour au moins un élément de réseau pour corriger l'état déterminé, comprenant:
- des moyens de détection (101) pour détecter (S101) un état du réseau électrique,
- des moyens de détermination (102) pour déterminer (S102) un cas compris dans la base de cas par une comparaison de l'état détecté avec les descriptions d'état comprises dans la base de cas, et
- des moyens de commande (103) pour commander (S103) la au moins une action de commutation indiquée pour le cas déterminé pour corriger l'état déterminé pour le au moins un élément de réseau afin de corriger l'état détecté du réseau électrique, la commande (S103) de l'action de commutation indiquée comprenant une exécution automatique de l'action de commutation indiquée par un dispositif de commutation permettant de piloter le réseau électrique, le dispositif étant **caractérisé en ce que** le moyen de commande (103) est adapté pour afficher l'action de commutation indiquée au moyen d'un dispositif d'affichage pour un utilisateur afin de permettre une intervention manuelle.

13. Dispositif selon la revendication 12,
**caractérisé par**
- des moyens de génération (104) pour générer au moins un cas comprenant au moins une description d'état d'un état déterminé du réseau électrique ainsi qu'au moins une indication d'une action de commutation pour au moins un élément de réseau pour corriger l'état déterminé,
- des moyens de simulation (105) pour exécuter une simulation énergie-flux du réseau électrique basée sur la description d'état ainsi que sur un modèle de simulation électromécanique pour ledit au moins un cas généré afin de déterminer un effet de l'action de commutation indiquée pour corriger l'état déterminé du cas généré,
- des moyens de détermination de probabilité (106) pour déterminer une probabilité de survenance de l'effet déterminé,
- des moyens d'évaluation (107) pour déterminer un chiffre d'indice définissant l'aptitude de l'action de commutation indiquée pour corriger l'état déterminé du cas généré au moyen d'une évaluation de l'effet déterminé, et
- des moyens de mémorisation (108) pour mémoriser le cas généré ainsi que l'effet déterminé, la probabilité déterminée de la survenance de l'effet déterminé et le chiffre d'indice déterminé dans la base de cas.

14. Dispositif selon la revendication 12 ou 13,
**caractérisé par** :
- des moyens d'identification (109) pour identifier au moins un état critique du réseau électrique,
- des moyens de génération (110) pour déterminer au moins une possible action de commutation pour au moins un élément de réseau pour corriger l'état critique,
- des moyens de simulation (111) pour exécuter une simulation énergie-flux du réseau électrique basée sur une description d'état de l'état critique du réseau électrique ainsi que sur un modèle de simulation électromécanique afin de déterminer un effet de l'action de commutation générée pour corriger l'état critique,
- des moyens de détermination de probabilité (112) pour déterminer une probabilité de survenance de l'effet déterminé,
- des moyens d'évaluation (113) pour déterminer un chiffre d'indice définissant l'aptitude de l'action de commutation générée pour corriger l'état critique au moyen d'une évaluation de l'effet déterminé, et
- des moyens de mémorisation (114) pour mémoriser l'état critique du réseau électrique si le chiffre d'indice déterminé présente une valeur inférieure à une valeur limite prédéfinie.
